## Europäisches Patentamt
## European Patent Office
## Office européen des brevets

(19)

(11) Numéro de publication: **0 192 593**
**B1**

(12) **FASCICULE DE BREVET EUROPÉEN**

(45) Date de publication du fascicule du brevet:
18.05.88

(51) Int. Cl.⁴: **B 01 D 13/00,** B 29 C 67/18, B 29 C 43/28, B 29 D 28/00

(21) Numéro de dépôt: 86420049.8

(22) Date de dépôt: 17.02.86

(54) **Procédé de fabrication d'un support intercalaire de membranes semi-perméables.**

(30) Priorité: 20.02.85 FR 8502990

(43) Date de publication de la demande:
27.08.86 Bulletin 86/35

(45) Mention de la délivrance du brevet:
18.05.88 Bulletin 88/20

(84) Etats contractants désignés:
DE FR GB IT SE

(56) Documents cité:
EP-A-0 045 073
DE-A-3 103 464
FR-A-1 603 630
FR-A-2 044 570
US-A-2 663 905
US-A-3 679 059

(73) Titulaire: CEFILAC, 23, rue Balzac, F-75008 Paris (FR)

(72) Inventeur: **Rogemont, Jean,** 43, rue d'Anjou,
F-42400 Saint Chamond (FR)
Inventeur: **Nouvet, André,** Montpailloux, F-42570
Saint Heand (FR)

(74) Mandataire: **Séraphin, Léon,** PECHINEY 28, rue de
Bonnel, F-69433 Lyon Cedex 3 (FR)

EP 0 192 593 B1

LIBER, STOCKHOLM 1988

## Description

Le procédé de l'invention concerne le domaine de la micro-filtration, qu'il s'agisse d'ultrafiltration, de perméation gazeuse ou d'hémodialyse, et il concerne plus précisément la fabrication d'un support intercalaire étanche qui sera placé entre les membranes ou sacs membranaires empilés constituant une unité de filtration.

## EXPOSE DU PROBLEME

Le support intercalaire consiste, de façon connue, en une grille perméable, typiquement en polyamide, ayant sur son pourtour des liserés de matériau élastomère, par exemple du silicone.

Ces liserés doivent jouer un rôle de joint d'étanchéité, à la fois interne et externe pour l'empilage des sacs membranaires serrés mécaniquement. Sur le plan interne, ils entourent les orifices correspondant aux orifices des sacs membranaires empilés, orifices servant à la circulation du fluide à filtrer dans ces sacs membranaires et dont l'étanchéité est importante pour l'efficacité et la qualité de la filtration. Sur le plan externe, les liserés doivent assurer l'étanchéité aussi bien sur les deux bords des sacs membranaires empilés ne comportant pas d'orifices que sur les deux bords portant les orifices précédents.

Les techniques traditionnelles de fabrication de tels supports intercalaires aboutissent à des liserés de contour irrégulier et surtout d'épaisseur irrégulière. Ces supports donnent une étanchéité déficiente pour les sacs membranaires empilés et serrés, et la coutume est d'utiliser de la colle pour pallier ces insuffisances d'étanchéité. Cette colle se répand à l'intérieur des sacs membranaires, en obstruant partiellement les canaux de communication et les surfaces de filtration.

Le problème que se propose de résoudre l'invention est l'obtention de supports intercalaires ayant des liserés conduisant à l'étanchéité sans adjonction de colle, ces liserés ayant accessoirement un contour bien régulier.

## ETAT DE LA TECHNIQUE CONNU

La demanderesse ne connaît pas de document antérieur concernant le procédé de fabrication de tels supports intercalaires.

Un procédé typique consiste en un surmoulage de silicone sur la grille de polyamide suivi d'une polymérisation (voir par exemple FR-A-1 603 630). Le moule ferme difficilement en tous points, et il se produit des échappements de silicone vers l'intérieur de la grille ainsi que des défauts de planéité ou des variations d'épaisseur des liserés conduisant aux défauts d'étanchéité mentionnés.

## EXPOSE DE L'INVENTION

Pour réaliser des liserés réguliers et étanches, la demanderesse a eu l'idée de remplacer le surmoulage par un transfert suivi d'un traitement de pénétration. L'élastomère cru étant déformé au moindre contact, on utilise un support-transfert qui permet de recueillir un ruban régulier d'élastomère cru, typiquement à la sortie d'une extrudeuse, puis de le découper selon le contour dessiné, puis de l'appliquer avec son support sur la grille perméable, la pénétration dans la grille et la polymérisation se faisant ensuite entre des surfaces parallèles. Et, de façon surprenante, le liseré obtenu est continu et lisse aussi bien sur la face de la grille sur laquelle l'élastomère a été appliqué que sur l'autre face. Les supports intercalaires obtenus permettent alors de constituer des cassettes ou unités de filtration étanches par simple serrage, sans emploi de colle.

De façon plus précise, le procédé de l'invention comprend essentiellement les étapes successives suivantes:

a) on dépose un film d'élastomère cru sur un support-transfert;

b) on découpe l'ensemble obtenu en an élément ayant, en ce qui concerne l'élastomère, la géométrie du liseré, ou en plusieurs éléments réalisant par application bout à but cette géométrie;

c) on applique ce ou ces éléments sur une face de la grille perméable, le matériau élastomère étant tourné vers la grille;

d) on traite la grille ainsi équipée en pression et à température comprise entre 100 et 150°C pour faire pénétrer l'élastomère dans la grille et le polymériser, le réglage (temps, température) étant tel qu'on obtient de chaque côté de la grille une surface de liseré parfaitement lisse, permettant une jonction étanche;

e) on extrait le support-intercalaire du dispositif de traitement et on détache de son liseré le (ou les), supports-transferts.

Les caractéristiques préférentielles suivantes s'appliquent à ce procédé, individuellement ou selon les diverses combinaisons possibles:

- le support-transfert est un film de polyester, d'épaisseur typiquement comprise entre 0,02 et 0,05 mm;

- le matériau élastomère est du silicone;

- (selon l'étape a), on dépose un film de silicone cru brut d'extrusion, donc calibré par cette extrusion, sur un film en polyester;

- ce film de silicone cru a une épaisseur constante comprise entre 0,2 et 0,6 mm, ou encorede préférence comprise entre 0,4 et 0,6 mm;

- la grille perméable utilisée est en polyamide;

- on traite la grille équipée d'élément (1) en élastomère cru sur support(s) transfert en pression et à température comprise entre 110 et 130°C pendant 1 à 5 min.

Le traitement en pression et en température (étape d) peut être effectué entre 2 plateaux parallèles. S'il s'agit de plateaux en métal, on protégera de préférence la face inférieure de la grille, face non garnie d'élastomère en début d'opération, par exemple par un tissu téflonné ou par un film de polyester, pour éviter le collage de l'élastomère au plateau inférieur en fin de traitement. La face supérieure du liseré d'élastomère est, elle, protégée vis-à-vis du collage, par son support transfert, qui sera détaché facilement du liseré après le traitement (étape e).

On peut aussi envisager d'utiliser un dispositif de calandrage pour réaliser l'application du film d'élastomère sur la grille, puis sa pénétration et sa polymérisation. En ce qui concerne la pénétration de l'élastomère dans la grille par pression, elle se fait par serrage des cylindres entre lesquels la grille se déplace de façon continue. Les liserés longitudinaux sont réalisés en une opération, les conditions de temps et de température nécessaires pour la polymérisation étant réalisées par l'ensemble du dispositif de calandrage. Les liserés transversaux sont ensuite réalisés en reprise, en déposant les éléments transversaux complétant le liseré d'étanchéité et en traitant à nouveau la grille en pression et en température, ce qui est sans inconvénient pour les liserés déjà polymérisés.

Cette reprise est faite soit en faisant une application des liserés transversaux sur la grille suivie d'un traitement entre deux plateaux parallèles, soit au moyen d'un dispositif de calandrage qui peut être le même.

Le procédé utilisant au moins en partie un dispositif de calandrage permet de réaliser soit des supports intercalaires de grande longueur, soit des supports intercalaires fabriqués en série.

Les films d'élastomère prédéposés sur support-transfert peuvent être interrompus de façon à permettre la découpe en grilles individuelles après le premier calandrage, et l'application dans les espaces réservés d'éléments de liseré transversaux.

Par rapport aux supports intercalaires de l'art antérieur, les supports de l'invention se distinguent par la géométrie de leurs liserés, dont le contour régulier ne dépend que de l'outillage de découpe et dont l'épaisseur varie très peu et surtout de façon progressive (pas de défauts localisés), la variation totale d'épaisseur du liseré d'un support ne dépassant pas 0,05 mm pour une épaisseur totale de liseré comprise entre 0,4 et 0,6 mm.

## EXEMPLE

L'exemple qui suit et les schémas qui l'illustrent permettent de mieux comprendre l'invention.

La figure 1 représente un film de silicone déposé sur un support-transfert, en vue de dessus.

La figure 2 représente l'ensemble obtenu après découpe, en vue de dessus.

La figure 3 représente une grille équipée d'un liseré en élastomère, composé de quatre éléments jointifs surmontés de leurs supports-transfert, en vue de dessus, ainsi que le support intercalaire obtenu après le traitement.

La figure 4 est un schéma d'empilement selon une coupe transversale selon le plan I-I repéré sur la figure 3.

La figure 5 est un schéma similaire, en coupe transversale, entre les deux plateaux parallèles du dispositif de traitement, à la fin du traitement.

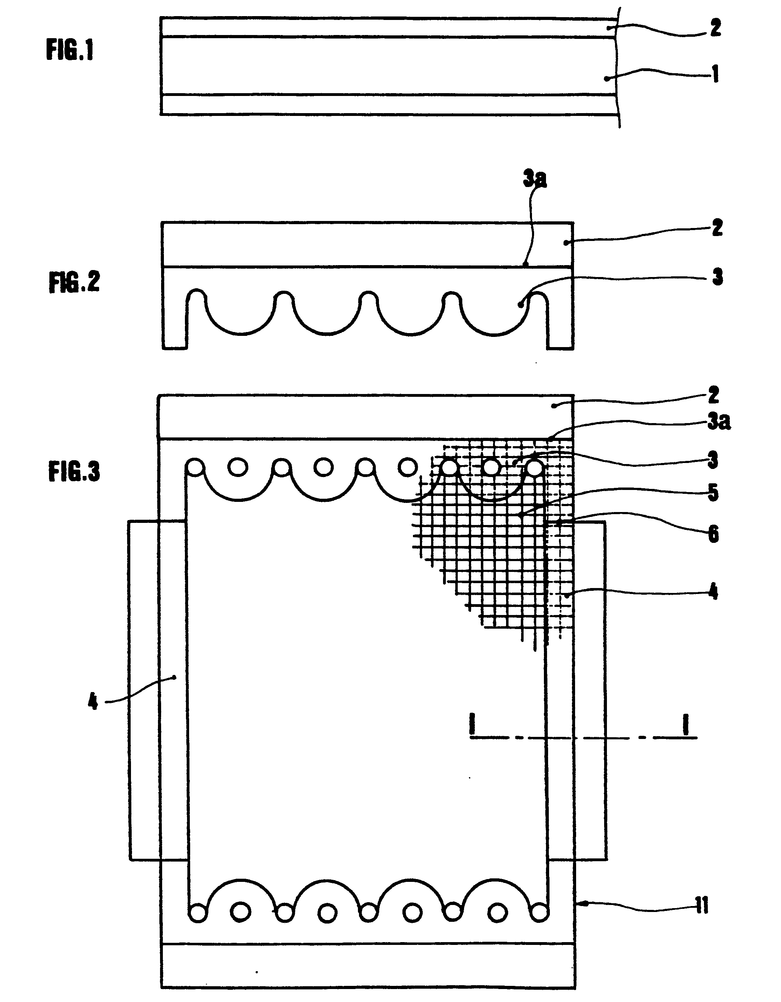

On a fabriqué une série de supports intercalaires en partant de grilles perméables d'épaisseur 0,3 mm en polyamide et de silicone cru extrudé en bande (1) de largeur 34 mm et d'épaisseur 0,5 mm déposée sur un film en polyester (2) servant de support-transfert (figure 1).

De telles grilles en polyamide ne se déforment qu'à plus de 150°C, ce qui permettra d'appliquer sur les grilles équipées le traitement thermique de l'invention. Ce qui suit relate la fabrication d'un seul support intercalaire.

On a découpé, par poinçonnage, l'ensemble de la bande silicone et de son film support en polyester en quatre éléments jointifs (figures 2 et 3), deux éléments transversaux (3) d'étanchéité interne des orifices correspondant aux orifices des sacs membranaires (figure 2) et deux éléments longitudinaux (4) servant avec les précédents à l'étanchéité du pourtour. Les éléments (3) ayant un bord rectiligne (3a), on a utilisé pour lui le bord de la bande extrudée (1) sans faire de nouvelle découpe, de sorte que le film en polyester (1) non recouvert subsiste au-delà du bord (3a).

Puis on a appliqué (figure 3) les quatre éléments (3) et (4) sur une grille rectangulaire (5) de 164 x 192 mm, préalablement percée près de chaque bord transversal (bords de 164 mm de long) d'orifices circulaires régulièrement espacés correspondant aux orifices des sacs membranaires.

Les éléments (3) et (4) sont jointifs et réalisent un liseré périphérique continu. Leurs lignes de jonction telles que (6) disparaîtront après le traitement, la grille (5) équipée devenant alors un support intercalaire (11) selon l'invention.

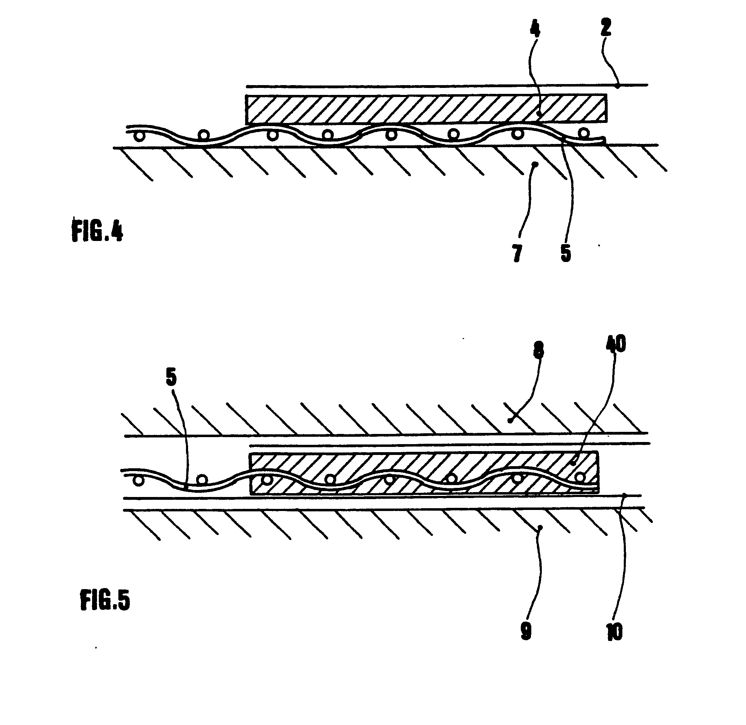

La figure 4 montre la disposition de l'empilage obtenu: au-dessus du plan de travail (7), on a successivement la grille (5) en polyamide, l'élément en silicone cru (4) et son film support en polyester (2), qui se prolonge au-delà du silicone (4) vers l'extérieur de la grille (5).

La grille (5) ainsi équipée a ensuite été placée dans un dispositif de compression chauffant à deux plateaux parallèles (8) et (9), le dessous de cette grille (5) étant protégé par une toile de verre téflonnée (10) (fig. 5).

Le traitement appliqué a été de 4 min à 120°C sous pression.

La disposition obtenue en fin de traitement est schématisée sur la figure 5. L'épaisseur du silicone polymérisé (40) est pratiquement inchangée (0,5 mm), mais elle se répartit pour environ 1/3 en-dessous de la grille (5) et pour environ 2/3 au-dessus de la grille. Le silicone a pénétré dans la grille (5) de façon continue, et la face supérieure et la face inférieure du liseré en silicone obtenu (40) sont lisses, une fois les films en polyester (2) détachés du liseré polymérisé, avec une variation maximale d'épaisseur de 0,02 mm.

On a ensuite utilisé 10 supports intercalaires (11) fabriqués de la même façon, pour constituer une unité ou cassette de filtration de 11 sacs membranaires (0,5 m² de filtration). Après serrage et mise en service, sans emploi de colle, on a constaté qu'il n'y avait pas de fuite.

**Revendications**

1. Procédé de fabrication d'un support intercalaire de membranes semiperméables, composé d'une grille perméable et d'un liseré d'étanchéité en matériau élastomère, caractérisé en ce qu'il comprend essentiellement les étapes successives suivantes:

a) on dépose un film d'élastomère cru (1) sur un support-transfert (2);

b) on découpe l'ensemble obtenu en un élément (3) ayant, en ce qui concerne l'élastomère, la géométrie du liseré, ou en plusieurs éléments (3, 4) réalisant par application bout à bout cette géométrie;

c) on applique ce ou ces éléments (3, 4) sur une face de la grille perméable (5), le matériau élastomère étant tourné vers la grille (5);

d) on traite la grille (5) ainsi équipée en pression et à température comprise entre 100 et 150°C, pour faire pénétrer l'élastomère dans la grille, et le polymériser, le réglage (temps, température) étant tel qu'on obtient de chaque côté de la grille une surface de liseré (40) lisse permettant une jonction étanche;

e) on extrait le support intercalaire (11) du dispositif de traitement, et on détache de son liseré le ou les supports-transferts (2).

2. Procédé selon la revendication 1, caractérisé en ce que le support-transfert (2) est un film de polyester.

3. Procédé selon la revendication 1, caractérisé en ce que le matériau élastomère (1) est du silicone.

4. Procédé selon la revendication 1, caractérisé en ce qu'on dépose un film de silicone cru (1) brut d'extrusion d'épaisseur constante comprise entre 0,2 et 0,6 mm sur un film en polyester (2).

5. Procédé selon la revendication 1, caractérisé en ce que la grille perméable (5) est en polyamide.

6. Procédé selon la revendication 1, caractérisé en ce qu'on traite la grille (5) équipée à température comprise entre 110 et 130°C pendant 1 à 5 min.

7. Procédé selon l'une quelconque des revendications 1 à 6, caractérisé en ce qu'on effectue le traitement de la grille (5) équipée (étape d) entre deux plateaux parallèles (8, 9).

8. Procédé de fabrication selon l'une quelconque des revendications 1 à 6, caractérisé en ce qu'on réalise les étapes c) et d) pour les liserés longitudinaux (4) du support intercalaire (11) au moyen d'un dispositif de calandrage, et en ce qu'on réalise en reprise les étapes c) et d) pour les liserés transversaux (3) en traitant la grille équipée (étape d) entre deux plateaux parallèles.

10. Procédé de fabrication selon l'une quelconque des revendications 1 à 6, caractérisé en ce qu'on réalise les étapes c) et d) d'abord pour les liserés longitudinaux (4), puis pour les liserés transversaux (3), en utilisant dans chaque cas un dispositif de calandrage.

**Patentansprüche**

1. Verfahren zur Herstellung einer Zwischenstütze für halbdurchlässige Membranen, bestehend aus einem durchlässigen Gitter und einem undurchlässigen Rand aus einem elastomeren Material,
gekennzeichnet durch
im wesentlichen folgende Stufen:

a) Aufbringen eines Rohelastomerfilms (1) auf eine Übertragungsstütze (2);

b) Ausschneiden der erhaltenen Konstruktion in ein Element (3) mit, in bezug auf das Elastomer, der Geometrie des Randes oder in mehrere Elemente (3, 4), die durch Aneinanderreihen diese Geometrie erhalten;

c) Aufbringen dieses oder dieser Elemente (3, 4) auf eine Seite des durchlässigen Gitters (5), wobei das elastomere Material zum Gitter (5) weist;

d) Beaufschlagen des so ausgestatteten Gitters (5) bei einer Temperatur von 100 bis 150°C, um das Elastomer in das Gitter einzupressen und es zu polymerisieren, wobei die Regulierung (Zeit, Temperatur) so eingestellt wird, daß auf jeder Seite des Gitters eine glatte, eine dichte Verbindung gestattende Randfläche (40) entsteht;

e) Entfernen der Zwischenstütze (11) aus der Behandlungsvorrichtung und Ablösen der Übertragungsstütze (n) (2) vom Rand.

2. Verfahren nach Anspruch 1, dadurch gekennzeichnet, daß als Übertragungsstütze (2) ein Polyesterfilm verwendet wird.

3. Verfahren nach Anspruch 1, dadurch gekennzeichnet, daß als elastomeres Material (1) Silikon verwendet wird.

4. Verfahren nach Anspruch 1, dadurch gekennzeichnet, daß ein extrudierter Rohsilikonfilm (1) mit einer konstanten Dicke von 0,2 bis 0,6 mm auf den Polyesterfilm (2) aufgebracht wird.

5. Verfahren nach Anspruch 1, dadurch gekennzeichnet, daß ein durchlässiges Gitter (5) aus Polyamid verwendet wird.

6. Verfahren nach Anspruch 1, dadurch gekennzeichnet, daß das ausgestattete Gitter (5) bei einer Temperatur von 110 bis 130°C während 1 bis 5 Minuten behandelt wird.

7. Verfahren nach einem der Ansprüche 1 bis 6, dadurch gekennzeichnet, daß das ausgestattete Gitter (5) zwischen zwei parallelen Platten (8, 9) behandelt wird (Stufe d).

8. Herstellungsverfahren nach einem der Ansprüche 1 bis 6, dadurch gekennzeichnet, daß die Stufen c) und d) für die Längsränder (4) der Zwischenstütze (11) mit einer Kalandriervorrichtung durchgeführt werden und die Stufen c) und d) für die Querränder (3) durch Behandeln des ausgestatteten Gitters (Stufe d) zwischen zwei parallelen Platten wiederholt werden.

9. Herstellungsverfahren nach einem der Ansprüche 1 bis 6, dadurch gekennzeichnet, daß die Stufe c) und d) zuerst für die Längsränder (4), dann für die Querränder (3) unter Anwendung in jedem Fall einer Kalandriervorrichtung durchgeführt werden.

**Claims**

1. A process for the production of an interposed support for semi-permeablé membranes comprising a permeable mesh an an sealing edge portion of elastomeric material, characterised in that it essentially comprises the following successive steps:

a) depositing a raw elastomer film (1) on a transfer support (2);

b) cutting the assembly produced into an element (3) which, as regards the elastomer, is of the geometry of the edge portion, or a plurality of elements (3, 4) which provide said geometry by being fitted together in end-to-end relationship;

c) applying said element or elements (3, 4) to one face of the permeable mesh (5), the elastomeric material being turned towards the mesh (5);

d) treating the mesh (5) which is equipped in that manner under pressure and at a temperature of between 100 and 150°C to cause the elastomer to penetrate into the mesh and to polymerise it, the regulation (time, temperature) being such that a smooth edge surface (40) permitting a sealing junction is obtained on each side of the mesh; and

e) removing the interposed support (11) from the treatment apparatus and detaching the transfer support or supports (2) from its edge portion.

2. A process according to claim 1 characterised in that the transfer support (2) is a polyester film.

3. A process according to claim 1 characterised in that the elastomeric material (1) is silicone.

4. A process wording to claim 1 characterised by depositing a raw silicone film (1) in the as-extruded condition, of a constant thickness of between 0.2 and 0.6 mm, on a polyester film (2).

5. A process according to claim 1 characterised in that the permeable mesh (5) is of polyamide.

6. A process according to claim 1 characterised by treating the equipped mesh (5) at a temperature of between 110 and 130°C for from 1 to 5 minutes.

7. A process according to any one of claim 1 to 6 characterised by carrying out the treatement on the equipped mesh (5) (step d) between two parallel plates (8, 9).

8. A production process according to any one of caims 1 to 6 characterised by carrying out steps c) and d) for the longitudinal edge portions (4) of the interposed support (11) by means of a calendering device, and by effecting steps c) and d), in a repeat operation, for the transverse edge portions (3), by treating the equipped mesh (step d) between two parallel plates.

9. A production process according to any one of claims 1 to 6 characterised by effecting steps c) and d) firstly for the longitudinal edge portions (4) and then for the transverse edge portions (3), using a calendering device in each case.

FIG.1

FIG.2

FIG.3

**FIG.4**

**FIG.5**